# EUROPÄISCHE PATENTSCHRIFT

(11) **EP 2 513 621 B1**
(45) Veröffentlichungstag und Bekanntmachung des Hinweises auf die Patenterteilung: **12.10.2016**
(21) Anmeldenummer: 10770528.7
(22) Anmeldetag: 19.10.2010
(51) Int. Cl.: G01L 9/00, G01L 19/14, G01L 19/00

(54) **VERFAHREN ZUM HERSTELLEN EINER DRUCKSENSORANORDNUNG SOWIE DRUCKSENSORANORDNUNG**
METHOD FOR PRODUCING A PRESSURE SENSOR ASSEMBLY AND PRESSURE SENSOR ASSEMBLY
PROCÉDÉ DE FABRICATION D'UN DISPOSITIF CAPTEUR DE PRESSION ET DISPOSITIF CAPTEUR DE PRESSION

(30) Priorität: 15.12.2009 DE 102009054689
(43) Veröffentlichungstag der Anmeldung: 24.10.2012
(73) Patentinhaber: Robert Bosch GmbH, 70442 Stuttgart (DE)
(72) Erfinder: KAISER, Ralf, 71566 Althuette (DE); STOLL, Oliver, 73230 Kirchheim-Teck (DE); PANHOELZL, Bernhard, 71384 Weinstadt (DE); ROESSER, Christian, 71723 Grossbottwar (DE); LEDERMANN, Markus, 73084 Salach (DE); RUETH, Falk, 70771 Leinfelden-Echterdingen (DE)
(86) Internationale Anmeldenummer: PCT/EP2010/065692
(87) Internationale Veröffentlichungsnummer: WO 2011/072911

(56) Entgegenhaltungen:
- EP-A2- 0 994 250
- EP-A2- 1 619 488
- JP-A- 2004 333 139
- US-A1- 2005 139 008

## Beschreibung

Die Erfindung betrifft ein Verfahren zum Herstellen einer Drucksensoranordnung, wobei die Drucksensoranordnung über ein Sensorgehäuseelement mit einem Drucksensor und ein Basisgehäuseelement verfügt, die eine durchgehende, den Drucksensor aufnehmende Ausnehmung aufweisen und miteinander verschweißt werden. Die Erfindung betrifft weiterhin eine Drucksensoranordnung.

### Stand der Technik

Verfahren der eingangs genannten Art sind aus dem Stand der Technik bekannt. Die Drucksensoranordnung liegt zunächst mehrteilig vor. Zum Herstellen der Drucksensoranordnung werden das Sensorgehäuseelement mit dem Drucksensor und das Basisgehäuseelement hergestellt. Sowohl das Sensorgehäuseelement als auch das Basisgehäuseelement weisen eine Ausnehmung auf. Dabei kann es vorgesehen sein, dass die Ausnehmung des Sensorgehäuseelements eine Sackausnehmung ist, das Sensorgehäuseelement also nicht vollständig durchgreift. Dagegen ist es üblicherweise vorgesehen, dass die Ausnehmung des Basisgehäuseelements dieses vollständig durchgreift. Anschließend werden das Sensorgehäuseelement und das Basisgehäuseelement derart angeordnet, dass die Ausnehmung des Basisgehäuseelements mit der Ausnehmung des Sensorgehäuseelements fluchtet, sodass eine durchgehende Ausnehmung gebildet wird. Dabei ist der Drucksensor in der Ausnehmung des Sensorgehäuseelements vorgesehen. Eine Druckwirkverbindung einer Umgebung zu dem Drucksensor ist über die durchgehende Ausnehmung hergestellt. Nach dem Ausrichten von Sensorgehäuseelement und Basisgehäuseelement derart, dass die durchgehende Ausnehmung vorliegt, werden Sensorgehäuseelement und Basisgehäuseelement miteinander verschweißt. Dies kann beispielsweise mittels Laserschweißen, Widerstandsschweißen oder Elektronenstrahlschweißen erfolgen.

Dabei ist üblicherweise in einem Anschlussbereich des Basisgehäuseelements oder des Sensorgehäuseelements, in welchem die Schweißnaht anschließend vorliegt, eine Schweißbadsicherung vorgesehen, um zu verhindern, dass während des Verschweißens Material in die Ausnehmung hineingelangen kann. Die Schweißbadsicherung wird dabei von einer Verjüngung der Ausnehmung des Basisgehäuseelements beziehungsweise des Sensorgehäuseelements gebildet. Zudem entsteht durch das Verschweißen eine Kerbe an der Schweißnaht beziehungsweise an der Schweißnahtwurzel. Die damit vorliegende Kerbwirkung verringert die Stabilität der Schweißverbindung und damit der gesamten Drucksensoranordnung. Zu der Kerbwirkung tritt der Umstand hinzu, dass von der Schweißbadsicherung ein Steifigkeitssprung zwischen Sensorgehäuseelement und Basisgehäuseelement zusätzliche Schubspannungen auf die Schweißnaht beziehungsweise die Schweißverbindung aufprägt. Insbesondere wenn für das Sensorgehäuseelement und/oder das Basisgehäuseelement hochvergütete Stähle verwendet werden, ist die Schweißverbindung zusätzlich durch das bei dem Verschweißen auftretende Aufschmelzen geschwächt.

Somit sind die aus dem Stand der Technik bekannten Verfahren zum Herstellen der Drucksensoranordnung lediglich zur Herstellung von Drucksensoren für einen bestimmten Druckbereich geeignet. Bekannt ist es beispielsweise, dass mit derart hergestellten Drucksensoranordnungen Nenndrücke von bis zu 2400 bar gemessen werden können. Soll die Geometrie des Sensorgehäuseelements oder des Basisgehäuseelements hinsichtlich einer höheren Druckfestigkeit der Drucksensoranordnung optimiert werden, so hat dies stets den Effekt, dass das Verschweißen schwieriger durchzuführen ist. Bei Sensorgehäuseelementen beziehungsweise Basisgehäuseelementen, welche lediglich auf eine hohe Druckfestigkeit ausgelegt sind, ist das Verschweißen häufig überhaupt nicht möglich. Die Geometrie des Sensorgehäuseelements beziehungsweise des Basisgehäuseelements kann daher stets lediglich ein Kompromiss zwischen Herstellbarkeit und Druckfestigkeit sein. Zum Stand der Technik sei beispielsweise die EP 1 518 099 B1 angeführt. Diese beschreibt eine Vorrichtung zur Druckmessung, wobei eine Druckmesszelle aus Edelstahl mit einem Anschlussstutzen verschweißt ist.

Aus der EP 0 994 250 A2 ist ein Verfahren zur Herstellung eines Hochdrucksensors mit einem Sensorgehäuseelement mit einem ballonartig gestalteten Druckraum bekannt. Das Sensorgehäuseelement wird in einem zweistufigen Schweißverfahren auf einen als Basisgehäuseelement vorgesehenen Gewindekörper aufgeschweißt, wobei zuerst eine Innenschweißung mittels einer Elektrostauchschweißung und anschließend eine Außenschweißung mit Elektrodenstrahl-, Schutzgas- oder Laserschweißung erfolgt.

### Offenbarung der Erfindung

Gegenüber dem Stand der Technik weist das Verfahren zum Herstellen der Drucksensoranordnung mit den Merkmalen des Anspruchs 1 den Vorteil auf, dass die hergestellte Drucksensoranordnung zur Messung von höheren Drücken, insbesondere größer als 2400 bar, verwendbar sind. Dies wird erfindungsgemäß erreicht, indem nach dem Verschweißen in dem Bereich der Schweißverbindung die Ausnehmung des Basisgehäuseelements und/oder des Sensorgehäuseelements durch Materialabtragen vergrößert wird. Auf diese Weise können bei Druckbeaufschlagung der Drucksensoranordnung auftretende Spannungen in der Schweißverbindung reduziert werden. Gleichzeitig bleibt die Trennung von Sensorgehäuseelement und Basisgehäuseelement erhalten, was Kostenvorteile bei der Herstellung bietet. In diesem Zusammenhang sei angemerkt, dass ein Herstellen einer einteiligen Drucksensoranordnung sehr aufwendig wäre, da der Drucksensor direkt auf diese einteilige Drucksensoranordnung appliziert werden müsste.

Zudem ist es bei den mehrteiligen Ausführungen der Drucksensoranordnung möglich, unterschiedliche Werkstoffe für Sensorgehäuseelemente beziehungsweise Basisgehäuseelemente zu verwenden. Auf diese Weise können weitere Kosten eingespart und der Werkstoff auf die jeweilige Aufgabe des Bauteils optimiert werden. Insbesondere muss das Material des Sensorgehäuseelements eine sehr hohe Reinheit aufweisen, während das für das Basisgehäuseelement verwendete Material äußerst hart sein soll. Bei aus dem Stand der Technik bekannten Verfahren zum Herstellen der Drucksensoranordnung muss eine bestimmte Einschweißtiefe bei dem Herstellen der Schweißverbindung unbedingt eingehalten werden. Aus diesem Grund ist die Schweißbadsicherung vorgesehen. Diese verhindert ein Durchschweißen, also das Herstellen einer Schweißverbindung derart, dass die Schweißverbindung die Innenwand der Ausnehmung erfasst. Diese Einschränkung entfällt bei dem erfindungsgemäßen Verfahren. Außerdem kann die Geometrie des Sensorgehäuseelements und/oder des Basisgehäuseelements ohne Einschränkungen hinsichtlich des Herstellens der Schweißverbindung optimiert werden, ohne zunächst Rücksicht auf die Druckfestigkeit der hergestellten Drucksensoranordnung nehmen zu müssen.

Diese Vorteile können durch das Materialabtragen erreicht werden, welches nach dem Verschweißen durchgeführt wird. Dabei erfolgt das Materialabtragen in dem Bereich der hergestellten Schweißverbindung, sodass die Ausnehmung des Basiselements und/oder des Sensorgehäuseelements vergrößert wird. Dabei kann beispielsweise eine Schweißnahtsicherung, welche in dem Sensorgehäuseelement und/oder dem Basisgehäuseelement vorgesehen ist, durch das Materialabtragen beseitigt werden. Auch die insbesondere bei Durchschweißen auftretenden Heißrisse an der Oberfläche der Schweißverbindung, also auf der Innenwand der Ausnehmung, können durch das Materialabtragen vergrößert werden. Das Materialabtragen erfolgt dabei derart, dass die Geometrie des Sensorgehäuseelements und/oder des Basisgehäuseelements nach dem Verschweißen hinsichtlich der Druckfestigkeit der Drucksensoranordnung optimiert wird. Das bedeutet, dass vorzugsweise nach dem Materialabtragen im Bereich der Schweißverbindung keine Durchmesseränderungen der durchgehenden Ausnehmung mehr vorliegen. Insbesondere im Bereich der Schweißverbindung sind also idealerweise konstante Abmessungen der Ausnehmung vorgesehen. Es liegt also eine zylindrische, besonders bevorzugt kreiszylindrische Ausnehmung vor. Mit dem erfindungsgemäßen Verfahren ist es möglich, die Drucksensoranordnung sowohl auf einfache Art und Weise aus mehreren zu verschweißenden Elementen herzustellen, als auch eine Drucksensoranordnung zu erhalten, welche für hohe Drücke ausgelegt ist.

Eine Weiterbildung der Erfindung sieht vor, dass bei dem Materialabtragen eine Schweißbadsicherung und/oder ein Teil der Schweißverbindung abgetragen wird. Wie vorstehend bereits ausgeführt, werden durch das Materialabtragen die Abmessungen der durchgehenden Ausnehmung vergrößert. Dabei kann die Schweißbadsicherung zumindest bereichsweise abgetragen werden. Zusätzlich oder alternativ ist es möglich, dass ein Teil der Schweißverbindung abgetragen wird, insbesondere derjenige Teil, welcher die Innenwand der Ausnehmung beziehungsweise die Schweißbadsicherung erfasst.

Eine Weiterbildung der Erfindung sieht vor, dass das Verschweißen von der Außenseite des Sensorgehäuseelements und des Basisgehäuseelements erfolgt. Es werden also zunächst das Sensorgehäuseelement und das Basisgehäuseelement derart zueinander angeordnet, dass aus den jeweiligen Ausnehmungen die durchgehende Ausnehmung gebildet ist. Vorzugsweise sind die Ausnehmungen von Sensorgehäuse und Basisgehäuseelement dabei koaxial angeordnet. Anschließend wird das Verschweißen ausgehend von der Außenseite der Drucksensoranordnung durchgeführt. Dabei kann eine bestimmte Einschweißtiefe eingestellt sein, also diejenige Tiefe, bis zu welcher die Schweißverbindung in das Material des Sensorgehäuseelements beziehungsweise des Basisgehäuseelements eindringt. Besonders bevorzugt ist es, eine radial durchgehende Schweißverbindung herzustellen, also durch das Material von Sensorgehäuseelement beziehungsweise Basisgehäuseelement durchzuschweißen. Auf diese Weise kann eine sehr stabile Schweißverbindung hergestellt werden.

Eine Weiterbildung der Erfindung sieht vor, dass die Schweißverbindung eine Innenwand der Ausnehmung und/oder die Schweißbadsicherung erfassend hergestellt wird. Ersteres ist insbesondere dann vorgesehen, wenn durch das Material von Sensorgehäuseelement beziehungsweise Basisgehäuseelement durchgeschweißt werden soll. In diesem Fall erstreckt sich die Schweißverbindung in axialer Richtung von einer Außenwand der Drucksensoranordnung bis hin zu der Innenwand der Ausnehmung. Das Durchschweißen kann mit oder ohne Schweißbadsicherung vorgesehen sein. Ist die Schweißbadsicherung vorgesehen, so kann es auch vorgesehen sein, dass die Schweißverbindung nicht durchgehend hergestellt wird, sondern lediglich derart, dass sie sich in radialer Richtung von der Außenwand bis hin zu der Schweißbadsicherung erstreckt. Auch auf diese weise kann eine zuverlässige und sichere Schweißverbindung hergestellt sein. Allerdings beeinträchtigt, wie bereits vorstehend ausgeführt, die Schweißbadsicherung die Druckfestigkeit der Drucksensoranordnung. Diese Beeinträchtigung wird jedoch durch das Materialabtragen in dem Bereich der Schweißverbindung beseitigt.

Eine Weiterbildung der Erfindung sieht vor, dass das Sensorgehäuseelement und das Basisgehäuseelement aus unterschiedlichen Materialien hergestellt werden. Dies wird durch die mehrteilige Ausführung der Drucksensoranordnung ermöglicht. Dabei werden die jeweils unterschiedlichen Anforderungen für das Sensorgehäuseelement und das Basisgehäuseelement bei der Wahl des Materials berücksichtigt. Beispielsweise kommt für das Sensorgehäuseelement, welches den Drucksensor aufweist, ein hochvergüteter Stahl zum Einsatz, während für das Basisgehäuseelement ein sehr hartes Material gewählt wird.

Eine Weiterbildung der Erfindung sieht vor, dass das Materialabtragen mittels Bohren, Fräsen und/oder elektrochemischem Abtragen erfolgt. Bei dem Bohren wird die durchgehende Ausnehmung zumindest im Bereich der Schweißverbindung aufgebohrt. Mit dieser Vorgehensweise lassen sich einfach auch größere Mengen Material abtragen. Das Bohren ist jedoch nicht für jede Geometrie und für jede zu erzielende Oberflächengüte geeignet. Erfolgt das Materialabtragen dagegen durch Fräsen, so kann eine höhere Oberflächengüte erreicht werden. Zudem kann eine Geometrie der durchgehenden Ausnehmung vergleichsweise frei gestaltet werden. Das Fräsen ist jedoch mit höheren Kosten bei der Herstellung der Drucksensoranordnung verbunden. Aus diesem Grund ist es vorteilhaft, wenn die Geometrie des Sensorgehäuseelements, des Basisgehäuseelements beziehungsweise der durchgehenden Ausnehmung derart optimiert ist, dass eine möglichst geringe Materialmenge abgetragen werden muss. Mittels des elektrochemischen Abtragens (ECM-Verfahren) kann nahezu jede beliebige Geometrie der Ausnehmung mit einer sehr guten Oberflächengüte hergestellt werden. Die Kosten und die Bearbeitungszeit für das elektrochemische Abtragen sind unmittelbar abhängig von der Menge des abzutragenden Materials, weshalb die Geometrie auch hier entsprechend optimiert werden sollte. Bei dem elektrochemischen Abtragen kann die Geometrie der Ausnehmung ohne Kompromisse auf die Optimierung des Spannungsverlaufs gestaltet werden.

Eine Weiterbildung der Erfindung sieht vor, dass der Drucksensor als Substrat auf einen Bereich des Sensorgehäuseelements aufgetragen wird. Der Drucksensor ist beispielsweise dünnschichtbasiert, es muss also die Dünnschicht auf zumindest einen Bereich des Sensorgehäuseelements aufgetragen werden. Der Drucksensor besteht dabei aus zumindest einem in Dünnschichttechnik hergestellten Widerstand. Vorzugsweise sind mehrere Widerstände vorgesehen, welche eine Wheatstonebrücke bilden. Der Drucksensor ist dabei vorzugsweise an der tiefsten Stelle der Ausnehmung angeordnet, also in einem Endbereich der Ausnehmung.

Eine Weiterbildung der Erfindung sieht vor, dass an dem Basisgehäuseelement ein Gewinde ausgebildet wird. Mit dem Gewinde kann die gesamte Drucksensoranordnung in eine Vorrichtung, in welcher der Druck bestimmt werden soll, eingeschraubt werden. Das Gewinde wird vorzugsweise vor dem Verschweißen durchgeführt, alternativ ist es jedoch auch möglich, erst nach dem Verschweißen das Gewinde an dem Basisgehäuseelement herzustellen.

Die Erfindung wird im Folgenden anhand der in der Zeichnung dargestellten Ausführungsbeispiele näher erläutert, ohne dass eine Beschränkung der Erfindung erfolgt. Es zeigen:
die Schweißbadsicherung 12 in der Ausnehmung 5 des Basisgehäuseelements 3 vor. Sie könnte jedoch ebenso gut zusätzlich oder alternativ in der Ausnehmung 4 des Sensorgehäuseelements 2 angeordnet sein. Die Schweißverbindung 11 dient dazu, das Sensorgehäuseelement mit dem Basisgehäuseelement 3 dauerhaft und druckfest zu verbinden. Dabei soll die Drucksensoranordnung 1 grundsätzlich für Drücke größer als 2400 bar geeignet sein. Die Schweißverbindung 11 beziehungsweise die gesamte Drucksensoranordnung 1 muss also für einen derartigen Druck ausgelegt sein.

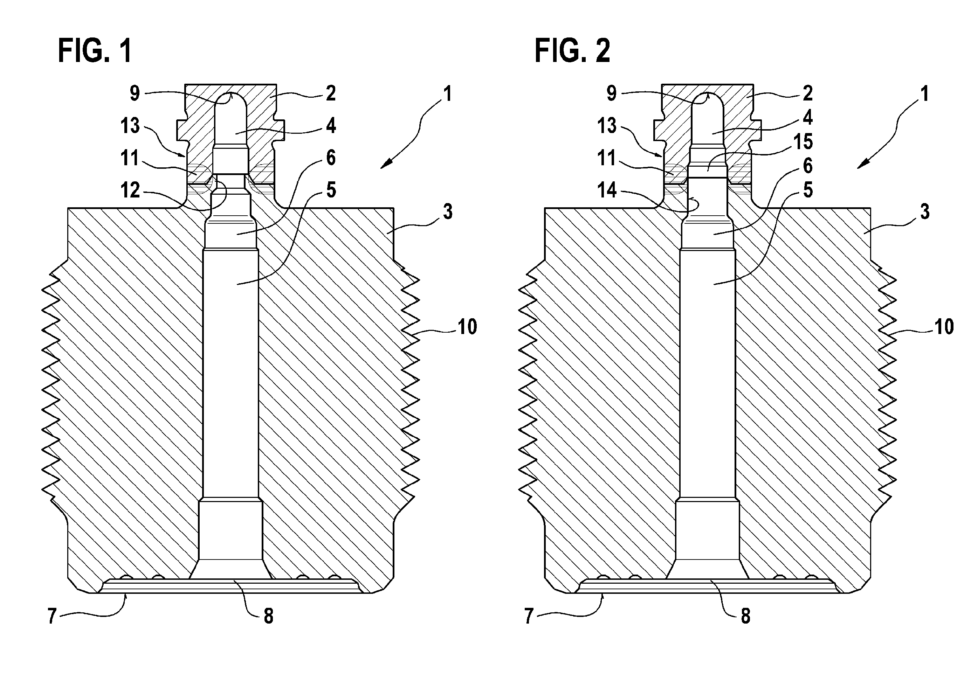

Die in der Figur 1 dargestellte Ausführungsform der Drucksensoranordnung 1 ist zunächst auf ein einfach durchführbares Verschweißen optimiert. Aus diesem Grund ist die Schweißbadsicherung 12 vorgesehen, welche eine Beschädigung der Drucksensoranordnung 1 verhindern soll. Nach der Herstellung der Schweißverbindung 11 weist diese jedoch eine Kerbe an der Schweißnaht beziehungsweise an der Schweißnahtwurzel auf. Dadurch liegt eine Kerbwirkung vor, welche die an der Schweißverbindung 11 auftretende Spannung erhöht. Dazu kommt, dass die Schweißbadsicherung 12 einen Steifigkeitssprung zwischen dem Sensorgehäuseelement 2 und dem Basisgehäuseelement 3 zusätzliche Schubspannungen auf die Schweißverbindung 11 aufprägt. Auch ist die Schweißverbindung 11 durch das bei dem Verschweißen auftretende Aufschmelzen geschwächt. Dies bedeutet, dass die Drucksensoranordnung 1, wie sie in Figur 1 dargestellt ist, noch nicht für den Einsatz bei hohen Drücken ausgelegt ist, jedoch ein einfaches Herstellen der Schweißverbindung 11 ermöglicht. Dabei erfolgt das Verschweißen ausgehend von einer Außenseite 13 des Sensorgehäuseelements 2 beziehungsweise des Basisgehäuseelements 3. Die Schweißverbindung liegt dabei derart vor, dass sie die Schweißbadsicherung 12, welche durch die Verringerung des Durchmessers der Ausnehmung 5 gebildet ist, erfasst.

Nach einem zweiten Herstellungsschritt liegt die aus der Figur 1 bekannte Drucksensoranordnung wie in der Figur 2 dargestellt vor. Während des zweiten Herstellungsschritts wird in dem Bereich der Schweißverbindung die Ausnehmung 6 durch Materialabtragen vergrößert. Dabei kann das Materialabtragen entweder im Bereich der Ausnehmung 4 des Sensorgehäuseelements 2, der Ausnehmung 5 des Basisgehäuseelements 3 oder beiden erfolgen. Entscheidend ist lediglich, dass nachfolgend des Materialabtragens im Bereich der Schweißverbindung 11 keine Änderungen der Abmessungen der Ausnehmung 6 vorliegen. Das bedeutet, dass beispielsweise die Schweißbadsicherung 12 und/oder ein Teil der Schweißverbindung 11 abgetragen werden. In der hier dargestellten Ausführungsform wird in dem zweiten Herstellungsschritt die Schweißbadsicherung 12 vollständig entfernt. Nach dem zweiten Herstellungsschritt erfasst also die Schweißverbindung 11 eine Innenwand 14 der Ausnehmung 6 beziehungsweise mindestens einer der Ausnehmungen 4 und 5. Dabei kann das Materialabtragen mittels Bohren, Fräsen beziehungsweise elektrochemischem Abtragen erfolgen. Die in den Figuren 1 und 2 dargestellte Ausführungsform der Drucksensoranordnung 1 ist für das Materialabtragen mittels Bohren optimiert.

Die Figur 2 zeigt dabei die aufgebohrte Ausnehmung 6, wobei der Aufbohrdurchmesser so klein ist, wie es die Toleranzen der verschweißten Drucksensoranordnung 1 zulassen. Um die Spannungen im Bereich der Schweißverbindung 11 so klein wie möglich zu halten, muss die Differenz zwischen dem Aufbohrdurchmesser und dem Durchmesser der Ausnehmung 4 des Sensorgehäuseelements 2 so klein wie möglich sein. Vorteilhafterweise ist vorgesehen, dass der Aufbohrdurchmesser dem Durchmesser der Ausnehmung 4 in einem Anschlussbereich 15 entspricht. Der Anschlussbereich 15 ist der Bereich der Ausnehmung 4, mit welchem diese in die Ausnehmung 5 einmündet. Die Kerbwirkung der Schweißverbindung 11 wird auf diese Weise eliminiert, wodurch die Spannung (Vergleichsspannung) in diesem Bereich vermindert wird. Außerdem wird der Steifigkeitssprung zwischen Sensorgehäuseelement 2 und Basisgehäuseelement 3 stark reduziert und auf einen Bereich abseits der Schweißverbindung 11 verschoben. Eventuell bei dem Verschweißen entstandene Heißrisse an einer Oberfläche der Schweißverbindung 11 werden durch das Materialabtragen ebenfalls entfernt. Die Schweißverbindung 11 liegt umlaufend vor, ist also über den gesamten Umfang der Drucksensoranordnung 1 ausgebildet. Auf diese Weise wird eine hervorragende Dichtheit der Schweißverbindung 11 zwischen Sensorgehäuseelement 2 und Basisgehäuseelement 3 erreicht. Eine auf diese Weise hergestellte Drucksensoranordnung 1 kann ohne Weiteres mit einem pulsierenden Druck von bis zu 3300 bar beaufschlagt werden.

Durch das nach dem Verschweißen durchgeführte Materialabtragen in dem Bereich der Schweißverbindung 11 kann gleichzeitig eine hohe Druckfestigkeit der Drucksensoranordnung 1 und eine einfache Herstellbarkeit erzielt werden. Letztere umfasst insbesondere die mehrteilige Ausbildung der Drucksensoranordnung 1, bei welcher das Sensorgehäuseelement 2 und das Basisgehäuseelement 3 aus unterschiedlichen Materialien bestehen.

## Patentansprüche

1. Verfahren zum Herstellen einer Drucksensoranordnung (1), wobei die Drucksensoranordnung (1) über ein Sensorgehäuseelement (2) mit einem Drucksensor und ein Basisgehäuseelement (3) verfügt, wobei das Sensorgehäuseelement (2) und das Basisgehäuseelement (3) eine durchgehende auf der Seite des Sensorgehäuseelementes in diesem endende Ausnehmung (4,5,6) aufweisen und miteinander verschweißt werden, **dadurch gekennzeichnet, dass** nach dem Verschweißen in dem Bereich der Schweißverbindung (11) die Ausnehmung (4,5) des Basisgehäuseelements (3) und/oder des Sensorgehäuseelements (2) durch Materialabtragen vergrößert wird.

2. Verfahren nach Anspruch 1, **dadurch gekennzeichnet, dass** bei dem Materialabtragen eine Schweißbadsicherung (12) und/oder ein Teil der Schweißverbindung (11) abgetragen wird.

3. Verfahren nach einem der vorhergehenden Ansprüche, **dadurch gekennzeichnet, dass** das Verschweißen von der Außenseite (13) des Sensorgehäuseelements (2) und des Basisgehäuseelements (3) erfolgt.

4. Verfahren nach einem der vorhergehenden Ansprüche, **dadurch gekennzeichnet, dass** die Schweißverbindung (11) eine Innenwand (14) der Ausnehmung (6) und/oder die Schweißbadsicherung (12) erfassend hergestellt wird.

5. Verfahren nach einem der vorhergehenden Ansprüche, **dadurch gekennzeichnet, dass** das Sensorgehäuseelement (2) und das Basisgehäuseelement (3) aus unterschiedlichen Materialien hergestellt werden.

6. Verfahren nach einem der vorhergehenden Ansprüche, **dadurch gekennzeichnet, dass** das Materialabtragen mittels Bohren, Fräsen und/oder elektrochemischem Abtragen erfolgt.

7. Verfahren nach einem der vorhergehenden Ansprüche, **dadurch gekennzeichnet, dass** der Drucksensor als Substrat auf einen Bereich des Sensorgehäuseelements (2) aufgetragen wird.

8. Verfahren nach einem der vorhergehenden Ansprüche, **dadurch gekennzeichnet, dass** an dem Basisgehäuseelement (3) ein Gewinde (10) ausgebildet wird.

## Claims

1. Method for producing a pressure sensor assembly (1), wherein the pressure sensor assembly (1) has a sensor housing element (2) with a pressure sensor and a base housing element (3), wherein the sensor housing element (2) and the base housing element (3) have a continuous recess (4, 5, 6) ending in the sensor housing element on the side of the latter and are welded to one another, **characterized in that**, after the welding, the recess (4, 5) of the base housing element (3) and/or of the sensor housing element (2) is enlarged in the region of the welded connection (11) by material removal.

2. Method according to Claim 1, **characterized in that** a weld pool backing (12) and/or part of the welded connection (11) is removed during the material removal.

3. Method according to either of the preceding claims, **characterized in that** the welding is effected from the outer side (13) of the sensor housing element (2) and of the base housing element (3).

4. Method according to one of the preceding claims, **characterized in that** the welded connection (11) is produced with an inner wall (14) of the recess (6) and/or the weld pool backing (12) being grasped.

5. Method according to one of the preceding claims, **characterized in that** the sensor housing element (2) and the base housing element (3) are produced from different materials.

6. Method according to one of the preceding claims, **characterized in that** the material is removed by means of drilling, milling and/or electrochemical machining.

7. Method according to one of the preceding claims, **characterized in that** the pressure sensor is applied as a substrate to a region of the sensor housing element (2).

8. Method according to one of the preceding claims, **characterized in that** a thread (10) is formed on the base housing element (3).

## Revendications

1. Procédé de fabrication d'un dispositif capteur de pression (1), dans lequel le dispositif capteur de pression (1) comporte un élément de corps de capteur (2) avec un capteur de pression et un élément de corps de base (3), dans lequel l'élément de corps de capteur (2) et l'élément de corps de base (3) présentent un évidement continu (4, 5, 6) se terminant dans l'élément de corps de capteur sur le côté de celui-ci et sont soudés l'un à l'autre, **caractérisé en ce que** l'on agrandit après le soudage, dans la région de l'assemblage soudé (11), l'évidement (4, 5) de l'élément de corps de base (3) et/ou de l'élément de corps de capteur (2) par enlèvement de matière.

2. Procédé selon la revendication 1, **caractérisé en ce que**, lors de l'enlèvement de matière, on enlève un soutien de bain de soudure (12) et/ou une partie de l'assemblage soudé (11).

3. Procédé selon l'une quelconque des revendications précédentes, **caractérisé en ce que** l'on effectue le soudage par le côté extérieur (13) de l'élément de corps de capteur (2) et de l'élément de corps de base (3).

4. Procédé selon l'une quelconque des revendications précédentes, **caractérisé en ce que** l'on fabrique l'assemblage soudé (11) en saisissant une paroi intérieure (14) de l'évidement (6) et/ou le soutien du bain de soudure (12).

5. Procédé selon l'une quelconque des revendications précédentes, **caractérisé en ce que** l'on fabrique l'élément de corps de capteur (2) et l'élément de corps de base (3) en des matériaux différents.

6. Procédé selon l'une quelconque des revendications précédentes, **caractérisé en ce que** l'on effectue l'enlèvement de matière par forage, fraisage et/ou érosion électrochimique.

7. Procédé selon l'une quelconque des revendications précédentes, **caractérisé en ce que** l'on dépose le capteur de pression comme substrat sur une région de l'élément de corps de capteur (2).

8. Procédé selon l'une quelconque des revendications précédentes, **caractérisé en ce que** l'on forme un filet (10) sur l'élément de corps de base (3).
